# EUROPEAN PATENT APPLICATION

(11) **EP 4 644 979 A1**
(43) Date of publication of application: **05.11.2025**
(21) Application number: 23911825.0
(22) Date of filing: 18.12.2023
(51) Int. Cl.: G02F 1/13, G02F 1/1334, G02F 1/137, G03B 21/62

(54) **TRANSPARENT PROJECTION SCREEN**

(30) Priority: 28.12.2022 JP 2022212162
(71) Applicant: Toppan Holdings Inc., Tokyo 110-0016 (JP)
(72) Inventor: YOSHIDA Tetsushi, Tokyo 110-0016 (JP); NODA Satoshi, Tokyo 110-0016 (JP); YASUHARA Toshiji, Tokyo 110-0016 (JP)
(74) Representative: TBK
(86) International application number: PCT/JP2023/045310
(87) International publication number: WO 2024/143045

(57) **Abstract**

A rear projection screen including: a light control sheet including two transparent electrode layers and a polymer dispersed liquid crystal located between the transparent electrode layers; and a transparent substrate having a front surface to which a rear surface of the light control sheet is attached, wherein the polymer dispersed liquid crystal includes at least one dichroic dye, and the light control sheet reversibly changes from a transparent state to a scattering state when a voltage applied across the transparent electrode layers is changed, the polymer dispersed liquid crystal has a thickness of film thickness D, a ratio of mass of the dichroic dye to mass of the polymer dispersed liquid crystal is a dye concentration C, and C × D ≥ 48 is satisfied.

## Description

### [Technical Field]

The present disclosure relates to a rear projection screen that changes light transmittance.

### [Background Art]

A light control sheet includes a light control layer containing a liquid crystal composition dispersed in a transparent resin and a pair of transparent electrode layers sandwiching the light control layer. The orientation of the liquid crystal compound changes in response to changes in the driving voltage applied across the pair of transparent electrode layers. A change in the orientation of the liquid crystal compound causes the light control layer to switch between a transparent state in which it transmits light and a scattering state in which it scatters light. The light control sheet in the scattering state is used in an image screen on which an image is projected (see, for example, PTL 1 and PTL 2).

### [Citation List]

### [Patent Literature]

[PTL 1] JP 2021-76802 A
[PTL 2] WO 2016/035227 A

### [Summary of the Invention]

### [Technical Problem]

The rear surface of a light control sheet for a rear projection screen is attached to the front surface of a transparent substrate such as a glass or resin substrate. In this case, the front surface of the light control sheet serves as an image incident surface of the rear projection screen that receives light from a projection device. The rear surface of the transparent substrate serves as an image emitting surface that emits an image toward an observer. In these rear projection screens, the light control sheet in the scattering state makes the image visible, but the light scattered between the image incident surface and the image emitting surface reduces the clarity of the image displayed on the image emitting surface.

### [Solution to Problem]

An aspect of a rear projection screen includes: a light control sheet including two transparent electrode layers and a polymer dispersed liquid crystal located between the transparent electrode layers; and a transparent substrate having a front surface to which a rear surface of the light control sheet is attached. The polymer dispersed liquid crystal includes at least one dichroic dye, and the light control sheet reversibly changes from a transparent state to a scattering state when a voltage applied across the transparent electrode layers is changed. The polymer dispersed liquid crystal has a thickness of film thickness D, a ratio of mass of the dichroic dye to mass of the polymer dispersed liquid crystal is a dye concentration C, and C × D ≥ 48 is satisfied.

An aspect of a rear projection screen includes: a light control sheet including two transparent electrode layers and a polymer dispersed liquid crystal located between the transparent electrode layers; and a transparent substrate having a front surface to which a rear surface of the light control sheet is attached. The polymer dispersed liquid crystal includes at least one dichroic dye, and the light control sheet reversibly changes from a transparent state to a scattering state when a voltage applied across the transparent electrode layers is changed. When an image having a white area formed by straight light rays and a black area surrounded by the white area is projected onto a front surface of the light control sheet in the scattering state, a ratio of a transmittance of the black area to a transmittance of the white area on a rear surface of the transparent substrate is 3% or less.

### [Brief Description of the Drawings]

Fig. 1 is a diagram showing a configuration of a rear projection screen along with a projection device.
Fig. 2 is a cross-sectional view showing a cross-sectional configuration of the rear projection screen.
Fig. 3 is a partial cross-section showing a cross-sectional configuration of a light control sheet.
Fig. 4 is a plan view showing an evaluation image of the rear projection screen.
Fig. 5 is a device layout showing how the rear projection screen is evaluated.
Fig. 6 is a table showing evaluation results of test examples.
Fig. 7 is an operational view showing optical operation of the rear projection screen.
Fig. 8 is a graph showing the relationship between absorbance and film thickness.
Fig. 9 is a graph showing the relationship between the effective film thickness increase rate and haze.
Fig. 10 is a graph showing the relationship between transmittance and film thickness.

### [Description of the Embodiments]

### [Rear projection screen 10]

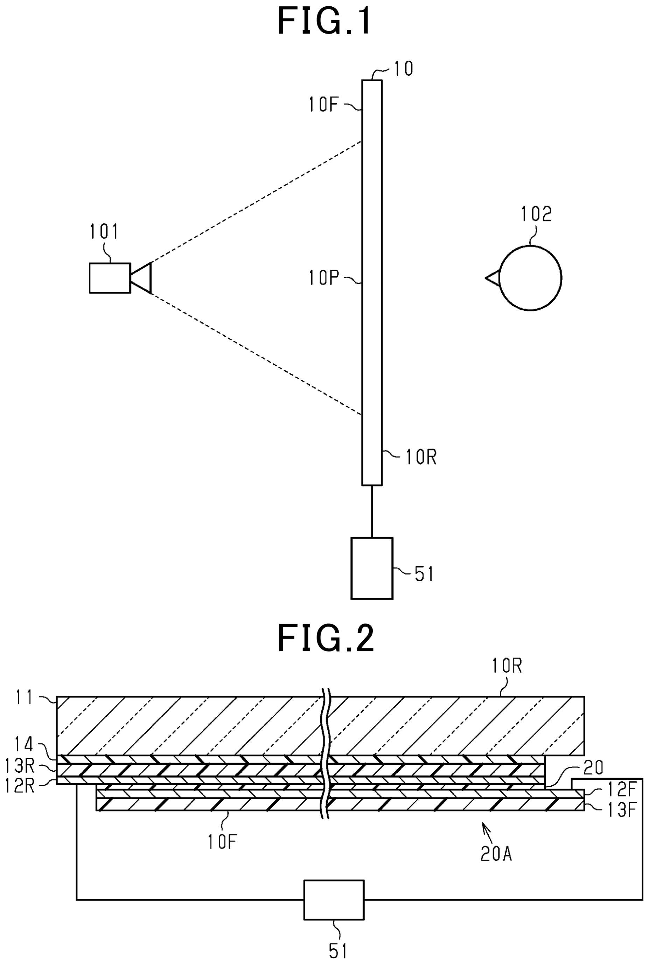

As shown in Fig. 1, a rear projection screen 10 is connected to a driving device 51. A driving device 51 inputs a voltage signal to the rear projection screen 10 to put the rear projection screen 10 into a transparent state. The driving device 51 inputs a voltage signal to the rear projection screen 10 to put the rear projection screen 10 into a scattering state. The rear projection screen 10 is reversibly changed from the transparent state to the scattering state by changing the voltage signal output by the driving device 51.

A front surface 10F of the rear projection screen 10 faces a projection device 101. The front surface 10F of the rear projection screen 10 is an image incident surface. A rear surface 10R of the rear projection screen 10 faces an observer 102. The rear surface 10R of the rear projection screen 10 is an image emitting surface. The projection device 101 projects an image 10P onto the rear surface 10R of the rear projection screen 10 in the scattering state. The observer 102 observes the image 10P from the opposite side of the rear projection screen 10 to the projection device 101.

As shown in Fig. 2, the rear projection screen 10 includes a transparent substrate 11 and a light control sheet 20A. A front surface of the light control sheet 20A is the front surface 10F of the rear projection screen 10. A rear surface of the transparent substrate 11 is the rear surface 10R of the rear projection screen 10.

The transparent substrate 11 may be a transparent glass substrate or a transparent resin substrate. The transparent substrate 11 may be window glass of a moving body such as a vehicle or aircraft, window glass of a building, or a partition placed in a vehicle or indoors. The front surface of the transparent substrate 11 may be flat or curved.

The thickness of the transparent substrate 11 is sufficiently greater than that of the light control sheet 20A. The transparent substrate 11 may have a thickness of 1 mm or more and 20 mm or less. The light control sheet 20A may have a thickness of 200 µm or more and 500 µm or less. The transparent substrate 11 may be a single-layer structure or a laminated structure. The transparent substrate 11 may be a float glass plate, a laminated glass, double glazing, or a tempered glass. When the transparent substrate 11 is a laminated structure, the structure forming the transparent substrate 11 may have a refractive index of 1.4 or more and 1.6 or less so that the transparent substrate 11 can be regarded as one transparent structure.

The light control sheet 20A includes a light control layer 20, a first transparent electrode layer 12F, a second transparent electrode layer 12R, a first transparent support layer 13F, and a second transparent support layer 13R. The light control layer 20 is sandwiched between the first and second transparent electrode layers 12F and 12R, and is in contact with the first and second transparent electrode layers 12F and 12R. The first transparent support layer 13F supports the first transparent electrode layer 12F on the side of the first transparent electrode layer 12F opposite the light control layer 20. The second transparent support layer 13R supports the second transparent electrode layer 12R on the side of the second transparent electrode layer 12R opposite to the light control layer 20. The second transparent support layer 13R is bonded to the transparent substrate 11 via a transparent adhesive layer 14.

The first and second transparent electrode layers 12F and 12R are both electrically conductive and transparent to visible light. A material of the first and second transparent electrode layers 12F and 12R may be a transparent inorganic oxide such as indium tin oxide, fluorine-doped tin oxide, tin oxide, or zinc oxide. A material of the first and second transparent electrode layers 12F and 12R may be carbon nanotubes, a conductive resin such as poly(3,4-ethylenedioxythiophene), a metal such as silver or a silver alloy, or a composite of metal and resin.

The first and second transparent support layers 13F and 13R are both transparent to visible light. The first and second transparent support layers 13F and 13R may each be a single-layer structure or a multilayer structure. A material of the first and second transparent support layers 13F and 13R is a synthetic resin or an inorganic compound. The synthetic resin may be a polyester such as polyethylene terephthalate or polyethylene naphthalate, a polyacrylate such as polymethyl methacrylate, a polycarbonate, or a polyolefin. The inorganic compound may be a silicon compound such as silicon dioxide, silicon oxynitride, or silicon nitride.

### [Light control layer 20]

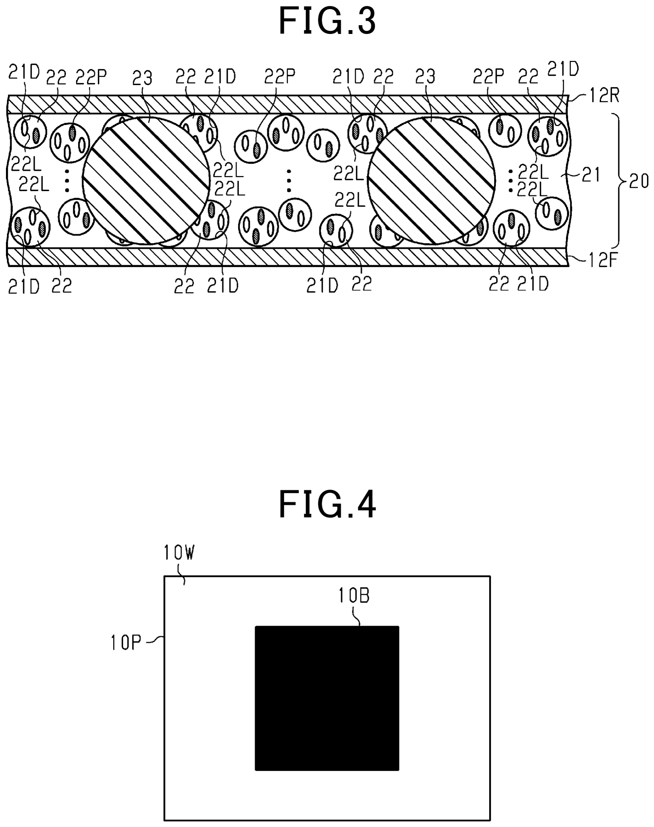

As shown in Fig. 3, the light control layer 20 includes a transparent polymer layer 21, a liquid crystal composition 22, and spacers 23. The light control layer 20 is a polymer dispersed liquid crystal.

The transparent polymer layer 21 is a cured product of a photopolymerizable compound. The transparent polymer layer 21 defines a plurality of voids 21D dispersed in the light control layer 20. The voids 21D may have a spherical, ellipsoidal, or irregular shape. The liquid crystal composition 22 is filled in the voids 21D. The proportion of the transparent polymer layer 21 to the light control layer 20 may be 30% by mass or more and 60% by mass or less. When the proportion of transparent polymer layer 21 is within this range, an appropriate density of the voids 21D required for an observer to observer an image can be obtained. It should be noted that the greater the proportion of the transparent polymer layer 21, the higher the mechanical strength of the light control layer 20. The smaller the proportion of the transparent polymer layer 21, the lower the voltage required to drive the light control sheet 20A.

The photopolymerizable compound for forming the transparent polymer layer 21 may be an ultraviolet-curable compound or an electron beam-curable compound. The photopolymerizable compound is compatible with the liquid crystal composition 22. When the photopolymerizable compound is an ultraviolet-curable compound, the dimensions of the voids 21D can be controlled more easily. The photopolymerizable compound may be a single polymerizable compound or a combination of two or more polymerizable compounds.

Examples of the ultraviolet-curable compound are acrylate compounds, methacrylate compounds, thiol compounds, styrene compounds, and oligomers of these compounds. The acrylate compounds include diacrylate compounds, triacrylate compounds, and tetraacrylate compounds. Examples of acrylate compounds are butyl ethyl acrylate, ethylhexyl acrylate, and cyclohexyl acrylate. The methacrylate compounds include dimethacrylate compounds, trimethacrylate compounds, and tetramethacrylate compounds. Examples of methacrylate compounds are N,N-dimethylaminoethyl methacrylate, phenoxyethyl methacrylate, methoxyethyl methacrylate, and tetrahydrofurfuryl methacrylate. Examples of thiol compounds are 1,3-propanedithiol and 1,6-hexanedithiol. Examples of styrene compounds are styrene and methylstyrene.

The liquid crystal composition 22 contains a liquid crystal compound 22L and a dichroic dye 22P. Note that the liquid crystal composition 22 may further contain a viscosity reducer, an antifoaming agent, an antioxidant, a weather resistance agent, or the like. Examples of the weather resistance agent include ultraviolet absorbers and photostabilizers. The proportion of the liquid crystal composition 22 to the light control layer 20 may be 40% by mass or more and 70% by mass or less. In a case where it is required to improve the transmittance of the light control sheet 20A in the transparent state and the haze of the light control sheet 20A in the scattering state, the proportion of the liquid crystal composition 22 is preferably 45% by mass or more and 55% by mass or less.

The liquid crystal compound 22L is a non-polymerizable compound. The dielectric constant of the liquid crystal compound 22L in its long axis direction is greater than the dielectric constant of the liquid crystal compound 22L in its short axis direction. In other words, the liquid crystal compound 22L has a positive dielectric anisotropy. The liquid crystal compound 22L may be at least one selected from the group consisting of Schiff base-based liquid crystal compounds, azo-based liquid crystal compounds, azoxy-based liquid crystal compounds, biphenyl-based liquid crystal compounds, terphenyl-based liquid crystal compounds, benzoate-based liquid crystal compounds, tolane-based liquid crystal compounds, pyrimidine-based liquid crystal compounds, pyridazine-based liquid crystal compounds, cyclohexane carboxylate-based liquid crystal compounds, phenylcyclohexane-based liquid crystal compounds, biphenylcyclohexane-based liquid crystal compounds, cyano-based liquid crystal compounds, dicyanobenzene-based liquid crystal compounds, naphthalene-based liquid crystal compounds, dioxane-based liquid crystal compounds, and fluorine-based liquid crystal compounds. The liquid crystal compound 22L may be a single liquid crystal compound or a combination of two or more liquid crystal compounds.

The dichroic dye 22P has an elongated molecular shape, and its molecules have a greater absorbance in the visible range in their long axis direction than in their short axis direction. The dichroic dye 22P exhibits a predetermined color when its long axis direction is substantially perpendicular to the direction of incidence of light. The color exhibited by the dichroic dye 22P is, for example, black or a color close to black. The dichroic dye 22P is driven by a guest-host system using the liquid crystal compound 22L as the host to exhibit a color.

The dichroic dye 22P may be at least one selected from the group consisting of polyiodides, azo-based compounds, anthraquinone-based compounds, naphthoquinone-based compounds, azomethine-based compounds, tetrazine-based compounds, quinophthalone-based compounds, merocyanine-based compounds, perylene-based compounds, and dioxazine-based compounds. The dichroic dye 22P may be a single dye or a combination of two or more dyes. To improve the lightfastness of the dichroic dye and the dichroic ratio, the dichroic dye 22P is preferably at least one selected from the group consisting of azo-based compounds and anthraquinone-based compounds, and more preferably is an azo-based compound.

A dye concentration C, that is, the proportion of the dichroic dye 22P to the light control layer 20, may be 0.5% by mass or more and 10% by mass or less. The proportion of the dichroic dye 22P to the light control layer 20 may be 1% by mass or more and 5% by mass or less, or 1.6% by mass or more and 4.0% by mass or less. When the proportion of the dichroic dye 22P is 0.5% by mass or more, in the opaque state, the coloration can be clearly recognized and the light transmittance can be sufficiently reduced. When the coloration is required to be clearer, the proportion of the dichroic dye 22P is preferably 1% by mass or more. When the image 10P is required to be even clearer, the proportion of the dichroic dye 22P is more preferably 1.6% by mass or more. When the proportion of the dichroic dye 22P is 10% by mass or less, precipitation of aggregated particles of the dichroic dye 22P can be suppressed. When it is required to suppress aggregation of the dichroic dye 22P, the proportion of the dichroic dye 22P is preferably 5% by mass or less, and more preferably 4.0% by mass or less.

The spacers 23 are dispersed across the transparent polymer layer 21. The spacers 23 make the thickness of the light control layer 20 uniform because each spacer 23 determines the thickness of the light control layer 20 in its vicinity. The spacers 23 may be bead spacers or photospacers formed by exposing and developing a photoresist. The spacers 23 can be colorless or colored as long as they are transparent to light. The color exhibited by colored transparent spacers 23 is preferably the same as that of the dichroic dye 22P.

A film thickness D, that is, the thickness of the light control layer 20, may be 10 µm or more and less than 50 µm. The thickness of the light control layer 20 approximately matches the size of the spacers 23. The thickness of the light control layer 20 is adjusted by changing the mean particle size of the spacers 23. The mean particle size of the spacers 23, in terms of median diameter D50, may be 10 µm or more and less than 50 µm. When the image 10P is required to be even clearer, and a reduced driving voltage is required, the thickness of the light control layer 20 is preferably 32 µm or less. When the image 10P is required to be even clearer, and the dichroic dye 22P is required to be uniformly dispersed, the thickness of the light control layer 20 is preferably 15 µm or less.

The light control sheet 20A may also include an alignment layer between the first transparent electrode layer 12F and the light control layer 20. The light control sheet 20A may also include an alignment layer between the second transparent electrode layer 12R and the light control layer 20. The light control sheet 20A may be of the reverse drive type. The light control sheet 20A may be of the normal drive type.

A light control sheet 20A of the reverse drive type changes from the transparent state to the scattering state when a voltage is applied across the first and second transparent electrode layers 12F and 12R. When the voltage application is stopped, the light control sheet 20A of the reverse drive type returns from the scattering state to the transparent state due to the orientation regulation force applied by the alignment layer. A light control sheet 20A of the normal drive type changes from the scattering state to the transparent state when a voltage is applied across the first and second transparent electrode layers 12F and 12R. When the voltage application is stopped, the light control sheet 20A of the normal drive type returns from the transparent state to the scattering state.

### [Optical characteristics]

As shown in Fig. 4, the image 10P for determining the optical characteristics of the rear projection screen 10 includes a black area 10B and a white area 10W. The white area 10W is a rectangular frame image that encloses the entire black area 10B. The black area 10B is a rectangular image that is entirely colored black. The black area 10B is projected onto the front surface 10F of the rear projection screen 10 as a rectangular frame image measuring 5 cm x 5 cm. The black area 10B is surrounded by the white area 10W. The white area 10W is irradiated with straight light rays from the projection device 101 on the front surface 10F of the rear projection screen 10. The black area 10B is not irradiated with straight light rays from the projection device 101 on the front surface 10F of the rear projection screen 10. Each straight light ray travels at an angle of within ±2.5° with respect to the optical axis of parallel light emitted from the projection device 101 along the normal direction of the front surface 10F.

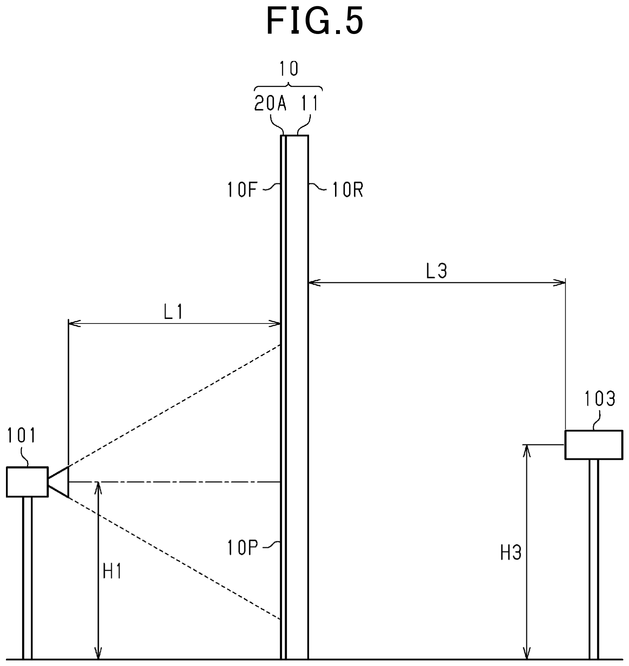

As shown in Fig. 5, a luminance that determines the optical characteristics of the rear projection screen 10 is obtained using the projection device 101 and a luminance meter 103. The projection device 101 is placed on the opposite side of the rear projection screen 10 from the luminance meter 103. A height H1 of the projection device 101 is 780 mm, and a distance L1 between the projection device 101 and the front surface 10F of the rear projection screen 10 is 565 mm. A height H3 of the luminance meter 103 is 1180 mm, and a distance L3 between the luminance meter 103 and the rear surface 10R of the rear projection screen 10 is 1140 mm. The measurement with the luminance meter 103 is carried out by setting a circular measurement range with a diameter of 3 cm and calculating the mean of the luminance values at measurement points included in the circle as the measurement value. The luminance of the black area 10B was calculated by aligning the geometric center of the black area 10B with the center of the circular measurement range, and obtaining the mean of the measurement range at the center of the black area 10B as the measured luminance. CS-1000 (manufactured by KONICA MINOLTA, INC.) can be used as the luminance meter. The illuminance of the space in which the projection device 101 is placed is 6 1x. The illuminance of the space in which the rear projection screen 10 is placed becomes 23 1x due to the projection of the image 10P. In other words, the rear projection screen 10 is placed in a space that is almost unaffected by environmental light. An LX-204 (manufactured by CUSTOM) can be used as the illuminometer.

The luminance of the area on the rear surface 10R of the rear projection screen 10 facing the white area 10W depends on the transmittance to light rays in the white area 10W. The luminance of the area facing the black area 10B on the rear surface 10R of the rear projection screen 10 depends on the leakage of the straight light rays emitted as the white area 10W. The ratio of the transmittance of the black area 10B to the transmittance of the white area 10W on the rear surface 10R is the ratio of scattering to transmission of parallel light in the rear projection screen 10. On the rear surface 10R, the ratio of the transmittance of the area facing the black area 10B to the transmittance of the area facing the white area 10W is a transmittance area ratio. The transmittance area ratio is obtained as the ratio of the luminance of the area on the rear surface 10R facing the black area 10B to the luminance of the area thereof facing the white area 10W. The transmittance area ratio of the rear projection screen 10 is 3% or less.

### [Test examples]

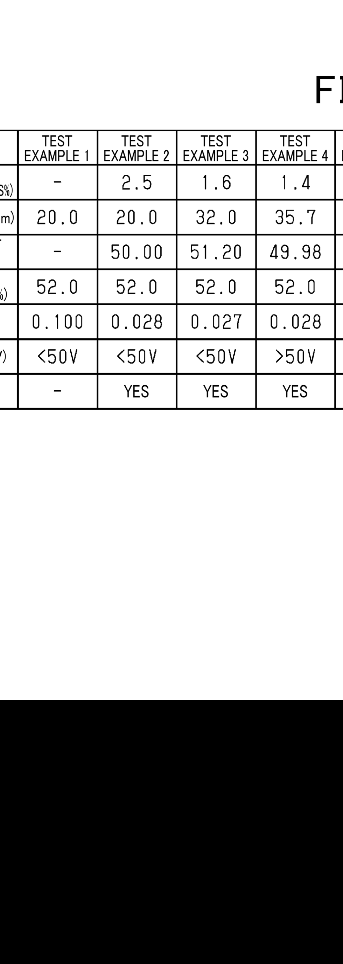

Fig. 6 shows the dye concentration C and film thickness D of the light control sheet 20A of each of Test Examples 1 to 10. The light control sheets 20A and the rear projection screens 10 of Test Examples 1 to 10 were obtained using the materials, compositions, and method described below.

First, a mixture of nematic liquid crystal compounds having positive dielectric anisotropy and mainly composed of a cyano-based liquid crystal compound and a fluorine-based liquid crystal compound was used as the liquid crystal compound 22L. A mixture of a multifunctional acrylate, a multifunctional methacrylate, a monofunctional acrylate, and a urethane acrylate as used as the photopolymerizable compound for forming the transparent polymer layer 21. The liquid crystal composition 22, the photopolymerizable compound, a polymerization initiator, and the spacers 23 were mixed together to obtain a coating solution for forming the light control layer 20 of Test Example 1. The photopolymerizable compound was mixed into the coating solution so that the proportion of the photopolymerizable compound to the coating solution is 52% by mass. The spacers 23 had a mean particle size of 20 µm in terms of median diameter D50.

Then, a black mixed dye made of an azo-based compound and an anthraquinone-based compound was used as the dichroic dye 22P. The liquid crystal composition 22, the photopolymerizable compound, a polymerization initiator, and the spacers 23 of Test Example 1, and the dichroic dye 22P were mixed together to obtain a coating solution for forming the light control layer 20 of Test Example 2. The photopolymerizable compound was mixed into the coating solution so that the proportion of the photopolymerizable compound to the coating solution is 52% by mass. Further, the dichroic dye 22P was mixed into the coating solution so that the dye concentration, which is the proportion of the dichroic dye 22P to the coating solution, was 2.5% by mass.

Next, each of the coating solutions in Test Examples 3 to 10 was obtained in the same manner as that in Test Example 2, except that the dye concentration C in the coating solution of Test Example 2 was changed within the range of 1.6% by mass or more and 4.5% by mass or less, and the mean particle size (median diameter D50) was changed within the range of 11.1 µm or more and 35.7 µm or less.

Next, the above coating solutions were used in the following method to obtain the light control sheets 20A of Test Examples 1 to 10.

First, an indium tin oxide film having a thickness of 100 nm was used as each of the first and second transparent electrode layers 12F and 12R. A polyethylene terephthalate film having a thickness of 125 µm was used as each of the first and second transparent support layers 13F and 13R.

The coating solution was applied to the first transparent electrode layer 12F laminated on the first transparent support layer 13F, and a coating film made of the coating solution was sandwiched between the second transparent electrode layer 12R laminated on the second transparent support layer 13R and the first transparent electrode layer 12F, thereby forming a laminate. The entire laminate was exposed to ultraviolet light having a central wavelength of 360 nm to cause phase separation into the transparent polymer layer 21 made of the photopolymerizable compound and the liquid crystal composition 22.

As a result, the light control sheets 20A of Test Examples 1 to 10 in which the light control layers 20 each had a thickness corresponding to the mean particle size of the spacers 23 were obtained. A float glass plate having a thickness of 3 mm was used as the transparent substrate 11. The rear projection screen 10 of each of Test Examples 1 to 10 was obtained by bonding the corresponding light control sheet 20A to the transparent substrate 11 using the transparent adhesive layer 14.

### [Evaluation: Transmittance area ratio]

Using the rear projection screens 10 of Test Examples 1 to 10, the transmittance area ratio, described with reference to Figs 4 and 5, was measured for each Test Example.

The luminance in the white area 10W of Test Example 1 was 1000 cd/m². The luminance in the black area 10B of Test Example 1 was 100 cd/m². The transmittance area ratio of Test Example 1 was 10%. In the image 10P obtained in Test Example 1, a whitish tinge was observed at the edge of the black area 10B bordering the white area 10W. The boundary between the white and black areas 10W and 10B was unclear in the image 10P obtained in Test Example 1.

The luminance in the white area 10W of Test Example 2 was 100 cd/m². The luminance in the black area 10B of Test Example 2 was 2.8 cd/m². The transmittance area ratio of Test Example 2 was 2.8%. In the image 10P obtained in Test Example 2, no whitish tinge was observed at the edge of the black area 10B bordering the white area 10W. The boundary between the white and black areas 10W and 10B appeared sufficiently clear in the image 10P obtained in Test Example 2, compared to that in the image 10P obtained in Test Example 1. The transmittance area ratios of Test Examples 3 to 8 were all no more than 3%. Similarly to Test Example 2, the boundary between the white and black area 10W and 10B appeared sufficiently clear in their images.

The transmittance area ratios of Test Examples 9 and 10 were 4.2% and 6.0%, respectively, which are less than that of Test Example 1 but more than 3%. In the images 10P obtained in Test Examples 9 and 10, the black area 10B was less whitish than that in Test Example 1, but still a slight whitish tinge was observed at the edge of the black area 10B bordering the white area 10W. The boundary between the white and black areas 10W and 10B was not clearly visible in the images 10P obtained in Test Examples 9 and 10.

The above results indicate that a clear image 10P can be obtained when the transmittance area ratio is 3% or less.

Note that the rear projection screen 10 of Test Example 6 had a transmittance area ratio that is 3% or less, within which the black area 10B does not appear whitish, but the dichroic dye 22P aggregated to some degree. Therefore, it was also found that, when the rear projection screen 10 is required to have a good appearance in the transparent state, the dye concentration C is preferably 4.0% by mass or less.

The rear projection screen 10 of Test Example 4 also had a transmittance area ratio that is 3% or less, within which the black area 10B does not appear whitish, but a voltage of 50 V or more was required to switch the screen from the scattering state to the transparent state. Therefore, it was also found that, when the rear projection screen 10 is required to have a reduced power consumption, the film thickness D is preferably 32 µm or less.

### [Evaluation: Absorbance A]

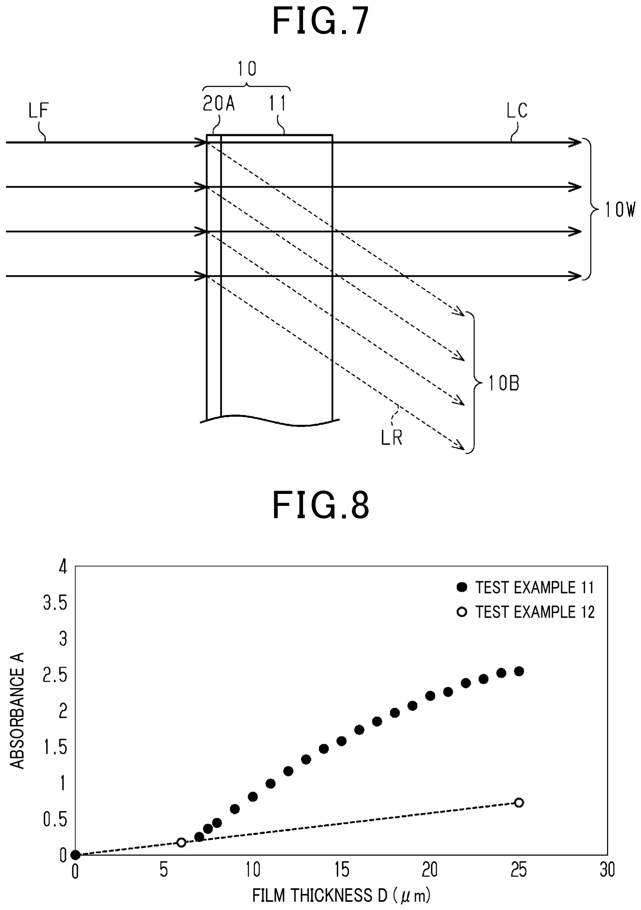

As shown in Fig. 7, some of the straight light rays LF for forming the white area 10W are transmitted through the light control layer 20 and the transparent substrate 11. The transmitted light LC that has passed through the light control layer 20 and the transparent substrate 11 is visually perceived as the white area 10W. On the other hand, some of the straight light rays LF for forming the white area 10W are scattered by the light control layer 20 and leak into the black area 10B. Leaked light LR leaking from the white area 10W into the black area 10B makes the black area 10B appear whitish.

In Test Examples 1, 9, and 10 with a transmittance area ratio above 3%, the black area 10B transmits the leaked light LR so that the black area 10B appears whitish. In contrast, in Test Examples 2 to 8 with a transmittance area ratio is 3% or less, the black area 10B scatters the leaked light LR, and also the dichroic dye 22P in the black area 10B absorbs it so that the leaked light LR cannot be visually perceived. In other words, in Test Examples 1, 9, and 10 with a transmittance area ratio above 3%, since the (b) black area 10B transmits a large amount of light, the black area 10B appears whitish. In contrast, in Test Examples 2 to 8 with a transmittance area ratio of 3% or less, since the (b) black area 10B transmits a reduced amount of light, the black area 10B appears clearer.

Increasing the probability of the dichroic dye 22P being present in the optical path through which the leaked light LR passes is effective in reducing the amount of light passing through the (b) black area 10B.

Fig. 8 shows the relationship between the film thickness D of the light control layer 20 and the absorbance A of the light control sheet 20A. The absorbance A was obtained by taking the logarithm of the reciprocal of the total light transmittance of the light control sheet 20A in the visible range. A light control sheet 20A of Test Example 12 in Fig. 8 was obtained by excluding the photopolymerizable compound and polymerization initiator from the coating solution components of Test Example 2, changing the mean particle size of the spacers 23 to 6 µm and 25 µm, and further changing the coating amount to values corresponding to the film thicknesses D of 6 µm and 25 µm. In other words, the light control sheet 20A of Test Example 12 does not have the voids 21D in the transparent polymer layer 21, and the absorbance A in Test Example 12 can be considered to be the absorbance A of only the liquid crystal composition 22 in an orientation state that is substantially the same as the random orientation state in Test Example 2. A light control sheet 20A of Test Example 11 in Fig. 8 was obtained by changing the mean particle size of the spacers 23 in the coating solution of Test Example 2 within the range of 6 µm or more and 25 µm or less, and changing the coating amount to values corresponding to the respective film thicknesses D between 6 µm and 25 µm.

As shown in Fig. 8, the absorbance A of the light control sheet 20A of Test Example 12 increases linearly as the film thickness D increases. The absorbance A of the light control sheet 20A of Test Example 11 increases non-linearly as the film thickness D increases. There is a part in the film thickness dependency of the absorbance A of the light control sheet 20A of Test Example 11 where it increases rapidly compared to the light control sheet 20A of Test Example 12. Note that the difference in increase in absorbance A per unit increase in film thickness D between Test Examples 11 and 12 becomes substantially the same as the film thickness D exceeds 20 µm.

These results indicate that the effect of the light control sheet 20A in suppressing transmission is non-linearly enhanced by providing the transparent polymer layer 21, that is, by enhancing scattering in the presence of the dichroic dye 22P. In other words, when the transparent polymer layer 21 is provided, the effect of the light control sheet 20A in suppressing transmission increases as (i) the dye concentration C increases and as (ii) the film thickness D increases. As the tendency of the increase in absorbance A per unit increase in film thickness D indicates, the effect of the light control sheet 20A in suppressing transmission is particularly remarkable when the film thickness D is 20 µm or less. Note that the tendency that the effect of suppressing transmission is remarkable when the film thickness D is 20 µm or less was seen in the range of 2.0% by mass or more and 3.0% by mass or less.

Returning to Fig. 6, in Test Examples 1, 9, and 10, the effective amount of dye, that is, the product of (i) the dye concentration C and (ii) the film thickness D, is 45 or less. On the other hand, the product of the dye concentration C and the film thickness D in Test Examples 2 to 8 is 48 or more.

These results show that, when the effective amount of dye, which is the product of the dye concentration C and the film thickness D, is 48 or more, a clear image 10P can be obtained.

For the rear projection screen 10 of Test Example 6, the product of the dye concentration C and the film thickness D was 48 or more, within which the black area 10B does not appear whitish. However, as described above, since the dichroic dye 22P aggregates to some degree in Test Example 6, when the rear projection screen 10 is required to have a good appearance in the transparent state, the dye concentration C is preferably 4.0% by mass or less.

For the rear projection screen 10 of Test Example 4, the product of the dye concentration C and the film thickness D was also 48 or more, within which the black area 10B is not observed to be whitish. However, as described above, since a voltage of 50 V or more is required to switch between the transparent state and the scattering state, when the rear projection screen 10 to have a reduced power consumption, the film thickness D is preferably 32 µm or less.

### [Evaluation: Haze]

An effective film thickness increase rate is the ratio of the absorbance A of each Test Example in the scattering state to the absorbance A of the liquid crystal composition 22. For example, in Fig. 8, when the film thickness D is 25 µm, the absorbance A of the liquid crystal composition 22 is 0.65, the absorbance A of Test Example 12 is 2.5, and the effective film thickness increase ratio is 385%. For example, in Fig. 8, when the film thickness D is 15 µm, the absorbance A of the liquid crystal composition 22 is 0.45, the absorbance A of Test Example 12 is 1.6, and the effective film thickness increase ratio is 355%.

The reference level used in determining the effective film thickness increase rate is the level when the transparent polymer layer 21 is not contained as in Test Example 12. The effective film thickness increase ratio is determined using the levels of two samples that are the same except that one contains the transparent polymer layer 21 while the other does not. Accordingly, the effective film thickness increase ratio emphasizes the contribution of the scattering structure of the transparent polymer layer 21 among various factors, such as the dye concentration C and the film thickness D, that contribute to the absorption of the leaked light LR.

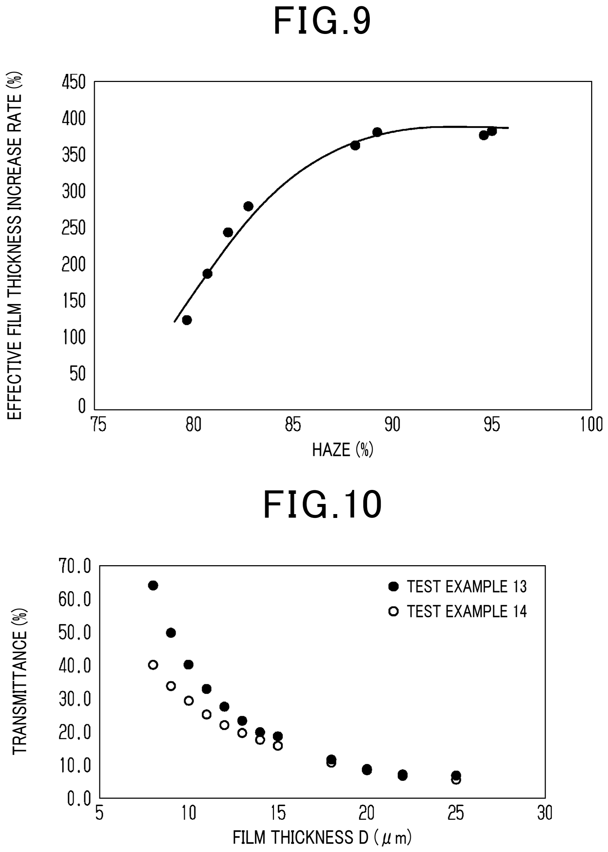

Fig. 9 shows the relationship between the haze of the light control sheet 20A in the scattering state and the effective film thickness increase ratio of the light control sheet 20A. Each of the haze values plotted in Fig. 9 was derived from a corresponding level of Test Example 11 using a method conforming to JIS K 7136:2000. The haze of the light control sheet 20A depends on the scattering structure of the transparent polymer layer 21. For example, when the number of voids 21D per unit area of the light control sheet 20A is large, the haze of the light control sheet 20A increases more than when the number of voids 21D is small. For example, when the surface area of voids 21D per unit volume of the light control sheet 20A is large, the haze of the light control sheet 20A increases more than when the surface area of voids 21D is small.

As shown in Fig. 9, when the haze of the light control sheet 20A is less than 90%, the higher the haze of the light control sheet 20A, the higher the effective film thickness increase ratio of the light control sheet 20A. In other words, the contribution of the scattering structure to the absorption of the leaked light LR increases as the degree of scattering by the scattering structure increases. On the other hand, when the haze of the light control sheet 20A is 90% or more, the effective film thickness increase ratio of the light control sheet 20A saturates in a high range of 350% or more, regardless of the haze of the light control sheet 20A. In other words, even if the degree of scattering by the scattering structure increases, the contribution of the scattering structure to the absorption of the leaked light LR is substantially saturated due to rate-limiting factors such as the absorption by the dichroic dye 22P.

These results indicate that, (iii) when the haze of the light control sheet 20A is 90% or more, the contribution of the scattering structure itself becomes saturated, and the effect of the light control sheet 20A in suppressing transmission becomes stable.

From the above, it was found that when the haze of the light control sheet 20A is 90% or more, clear images 10P can be stably achieved even if there is variation in the size and number of the voids 21D.

### [Evaluation: Liquid crystal proportion]

Fig. 10 shows the relationship between the film thickness D of the light control layer 20 and the total light transmittance of the light control sheet 20A. A light control sheet 20A of Test Example 13 in Fig. 10 was obtained by changing the liquid crystal proportion in the coating solution of Test Example 2 to 55% by mass, changing the mean particle size of the spacers 23 within the range of 7.5 µm or more and 25 µm or less, and also changing the coating amount to values corresponding to the respective film thicknesses D between 7.5 µm and 25 µm. A light control sheet 20A of Test Example 14 in Fig. 10 was obtained by changing the liquid crystal proportion in the coating solution of Test Example 2 to 45% by mass, changing the mean particle size of the spacers 23 within the range of 7.5 µm or more and 25 µm or less, and also changing the coating amount to values corresponding to the respective film thicknesses D between 7.5 µm and 25 µm.

As shown in Fig. 10, when the film thickness D is less than 15 µm, the higher the liquid crystal proportion, the higher the difference in transmittance between the light control sheets 20A. For example, when the film thickness D is 7.5 µm, the transmittance is 65% when the liquid crystal proportion is 55% by mass, and the transmittance is 40% when the liquid crystal proportion is 45% by mass. For example, when the film thickness D is 10 µm, the transmittance is 40% when the liquid crystal proportion is 55% by mass, and the transmittance is 30% when the liquid crystal proportion is 45% by mass. On the other hand, when the thickness D is 15 µm or more, the difference in transmittance between the light control sheets 20A is approximately the same regardless of the liquid crystal proportion. In other words, even if the liquid crystal proportion changes, the contribution of the liquid crystal proportion to the transmittance of the light control sheet 20A is substantially stable because the contribution of the film thickness D itself is rate-limiting.

These results indicate that, (iv) when the film thickness D of the light control sheet 20A is 15 µm or more, the transmission is less likely to change depending on the liquid crystal proportion, and the effect of the light control sheet 20A in suppressing transmission becomes stable.

### [Effects]

According to the above embodiment, the advantageous effects described below can be achieved.
(1) Since the effective amount of dye, which is the product of the dye concentration C and the film thickness D for the rear projection screen 10, is 48 or more, a clear image 10P can be obtained.
(2) Since the rear projection screen 10 has a transmittance area ratio of 3% or less, a clear image 10P can be obtained.
(3) When the film thickness D of the light control layer 20 is 15 µm or more, the variation in clarity due to the liquid crystal proportion can be suppressed.
(4) When the film thickness D of the light control layer 20 is 32 µm or less, the power consumption of the rear projection screen 10 can be reduced.
(5) When the haze of the light control sheet 20A is 90% or more, the variation in clarity caused by the variation in the scattering structure of the transparent polymer layer 21 can be suppressed.

The embodiment described above may be modified and implemented as follows.

- The dichroic dye 22P is not limited to a black mixed dye, but may be a single black dye, a blue mixed dye, or a single blue dye. The type and composition ratio of the dichroic dye 22P can be changed as appropriate as long as the above optical conditions are satisfied.

- The drive type of the light control sheet 20A may be either the reversed drive type or the normal drive type as long as the effective amount of dye is 48 or more, or the transmittance area ratio is 3% or less.

## Claims

1. A rear projection screen comprising:
a light control sheet including two transparent electrode layers and a polymer dispersed liquid crystal located between the transparent electrode layers; and
a transparent substrate having a front surface to which a rear surface of the light control sheet is attached,
wherein the polymer dispersed liquid crystal includes at least one dichroic dye, and the light control sheet reversibly changes from a transparent state to a scattering state when a voltage applied across the transparent electrode layers is changed,
the polymer dispersed liquid crystal has a thickness of film thickness D,
a ratio of mass of the dichroic dye to mass of the polymer dispersed liquid crystal is a dye concentration C, and
C × D ≥ 48 is satisfied.

2. The rear projection screen according to claim 1, wherein the film thickness D is 15 µm or more and 32 µm or less.

3. The rear projection screen according to claim 2, wherein the film thickness D is 20 µm or less.

4. The rear projection screen according to claim 2, wherein the dye concentration C is 1.6% by mass or more and 4.0% by mass or less.

5. A rear projection screen comprising:
a light control sheet including two transparent electrode layers and a polymer dispersed liquid crystal located between the transparent electrode layers; and
a transparent substrate having a front surface to which a rear surface of the light control sheet is attached,
wherein the polymer dispersed liquid crystal includes at least one dichroic dye, and the light control sheet reversibly changes from a transparent state to a scattering state when a voltage applied across the transparent electrode layers is changed, and
when an image having a white area formed by straight light rays and a black area surrounded by the white area is projected onto a front surface of the light control sheet in the scattering state, a ratio of a transmittance of the black area to a transmittance of the white area on a rear surface of the transparent substrate is 3% or less.

6. The rear projection screen according to claim 5, wherein the light control sheet in the scattering state has a haze of 90% or more.

7. The rear projection screen according to any one of claims 1 to 6, wherein a ratio of mass of the liquid crystal composition to mass of the polymer dispersed liquid crystal is 45% by mass or more and 55% by mass or less.

8. The rear projection screen according to any one of claims 1 to 6, wherein the dichroic dye is a black mixed dye.
